# EUROPÄISCHE PATENTSCHRIFT

(11) **EP 2 510 024 B1**
(45) Veröffentlichungstag und Bekanntmachung des Hinweises auf die Patenterteilung: **30.10.2013**
(21) Anmeldenummer: 10787475.2
(22) Anmeldetag: 08.12.2010
(51) Int. Cl.: C08F 220/44, C08F 283/00, C08G 77/62, D01D 5/08

(54) **ACRYLNITRIL-SILAZAN-COPOLYMERE, INSBESONDERE IN FASERFORM, VERFAHREN ZU DEREN HERSTELLUNG UND IHRE VERWENDUNG**
ACRYLONITRILE-SILAZANE COPOLYMERS, ESPECIALLY IN FIBER FORM, PROCESS FOR PREPARATION THEREOF AND USE THEREOF
COPOLYMÈRES D'ACRYLONITRILE-SILAZANE, EN PARTICULIER SOUS FORME FIBREUSE, PROCÉDÉ DE PRODUCTION ET UTILISATION DESDITS POLYMÈRES

(30) Priorität: 09.12.2009 DE 102009059777
(43) Veröffentlichungstag der Anmeldung: 17.10.2012
(73) Patentinhaber: Fraunhofer-Gesellschaft zur Förderung der angewandten Forschung e.V., 80686 München (DE); Clariant Finance (BVI) Limited, Road Town, Tortola (VG)
(72) Erfinder: BAUER, Monika, 15712 Königs-Wusterhausen (DE); DECKER, Daniel, 65835 Liederbach (DE); MOTZ, Guenther, 95448 Bayreuth (DE)
(74) Vertreter: Olgemöller, Luitgard Maria
(86) Internationale Anmeldenummer: PCT/EP2010/069196
(87) Internationale Veröffentlichungsnummer: WO 2011/070081

(56) Entgegenhaltungen:
- WO-A1-2006/071907
- WO-A2-2006/071914

## Beschreibung

Die vorliegende Erfindung betrifft Copolymere aus Acrylnitril und Silazanen, die mindestens eine organisch polymerisierbare Doppelbindung, insbesondere eine Vinylgruppe aufweisen. Die Copolymere sind wegen ihres Gehalts an Silicium-, Stickstoff- und Kohlenstoffatomen interessant, z.B. als Feuerschutzmaterialien oder als Ausgangsmaterialien für pyrolysierte Systeme der Zusammensetzung SiCN (Siliciumcarbonitride), SiC (Siliciumcarbide) oder SiN (Siliciumnitride). Sowohl pyrolysiert als auch nicht pyrolysiert können die Materialien in beliebiger Form, insbesondere in Form von Fasern vorliegen.

Die vorgenannten Systeme eignen sich als Werkstoffe für ein breites Anwendungsspektrum, da sie hohe mechanische Festigkeiten bei hohen Temperaturen sowie eine gute Oxidationsbeständigkeit aufweisen. Die pyrolysierten Produkte besitzen die Eigenschaften von Keramiken und werden z.B. in Form von Fasern oder keramischen Matrices als Verstärkungselemente in Bauteilen eingesetzt, die hohen Temperaturen und/oder korrosiven Medien ausgesetzt sind oder widerstehen sollen.

Additionspolymere von Polysilazanen mit Isocyanaten oder Isothiocyanaten sind in US 4,929,704, US 5,001,090 und US 5,021,533 beschrieben. Mit Iso(thio)cyanaten enstehen hauptsächlich lineare Produktgemische, in denen -N-C(A)-Gruppen (mit A = O oder S) in Si-N-Bindungen eingeschoben sind. Die Reaktion eines mit 2,6-Toluoldiisocyanat umgesetzten, flüssigen Polysilazans führt zu einem glasartigen Produkt mit einem deutlich erhöhten Kohlenstoffgehalt. Erwähnt wird in diesen Druckschriften auch die Möglichkeit, Polysilazane mit Ketenen, Thioketenen, Carbodiimid oder CS₂ umzusetzen. Konkrete Beispiele hierfür oder gar Produkteigenschaften finden sich jedoch nicht. Die Produkte werden als Ausgangsmaterial für siliciumnitridhaltige Keramikfasern vorgeschlagen.

SiC-Keramikfasern werden häufig ausgehend von Silanen/Polysilanen synthetisiert. Dieser Syntheseweg ist jedoch nicht frei von Schwierigkeiten. So müssen für das - seltener angewandte - Trockenspinnverfahren Pyrolyseprodukte von Ausgangsmaterialien aufgefunden werden, die einerseits löslich sind, andererseits aber unter der Einwirkung der bei der Pyrolyse eingebrachten Wärmeenergie nicht schmelzen. Materialien, die diesem Kriterium genügen, sind jedoch häufig nur auf kompliziertem Wege herstellbar oder aber müssen vor der eigentlichen Pyrolyse gehärtet werden. Hierzu darf auf die Arbeiten der TU Bergakademie Freiberg sowie des Instituts für Silicatforschung der Fraunhofer-Gesellschaft in Würzburg verwiesen werden.

Häufiger wird ein Schmelzspinnprozess eingesetzt. Besonders nachteilig ist hierbei jedoch die Notwendigkeit, die Polymerfasern mittels Elektronenbestrahlung härten zu müssen, wofür extrem hohe Dosen von ca. 20 MGy erforderlich sind.

Aufgabe der Erfindung ist es, ein für das Gebiet des Flamm- und Feuerschutzes geeignetes Material aufzufinden, das sich zu stabilen Formkörpern, beispielsweise selbsttragenden Fasern verarbeiten lässt. In bevorzugten Ausgestaltungen sollte es sich insbesondere in Form von stabilen Fasern einer Pyrolyse unterziehen lassen, um Materialien der Zusammensetzung SiC, SiN oder SiCN zu gewinnen.

In Lösung der Aufgabe wird ein Copolymer bereitgestellt, hergestellt aus (i) Acrylnitril oder aus einer Mischung, die Acrylnitril und ein organisches Molekül, das sich mit Acrylnitril copolymerisieren lässt, und (ii) einem C=C-Doppelbindungen enthaltenden Silazanmaterial.

Mit dem Ausdruck "Silazane" werden allgemein Verbindungen bezeichnet, die die Gruppe R¹R²R³Si-N(R⁴)SiR⁵R⁶R⁷ enthalten. Ein sehr einfacher Vertreter dieser Gruppe ist das Disilazan, H₃Si-NH-SiH₃. Cyclische und lineare Silazane umfassen oder bestehen aus Struktureinheiten -Si(R¹R²)-N(R³)-. Ausgehend von den Grundstrukturen ist eine Vielzahl von Silazanen entwickelt worden, deren Substituenten am Silicium beispielsweise neben Wasserstoff Alkyl, Alkenyl oder Aryl und deren Substituenten am Stickstoff neben Wasserstoff Alkyl oder Aryl sein können. Es existieren oligomere und polymere Strukturen, auch unter Einbau zusätzlicher Gruppen wie Harnstoffgruppen, sowie verschiedene Ringe und Mehrfachringe.

Die Erfinder der vorliegenden Anmeldung konnten überraschend feststellen, dass sich Silazane, die eine oder mehrere C=C-Doppelbindungen aufweisen, mit Acrylnitril in für dieses Material geeigneten Lösungsmitteln in Anwesenheit von gängigen Additionspolymerisationskatalysatoren zu Polymeren copolymeriseren lassen, die in der Regel in dem verwendeten Reaktionslösemittel (z.B. DMF oder einem anderen, für Acrylnitril geeigneten Lösungsmittel) löslich bleiben. Die Copolymerisate sind in der Regel in den gleichen Lösungsmitteln löslich wie Acrylnitril und Polyacrylnitril. Nach Entfernen des Lösungsmittels liegen sie in bei Raumtemperatur fester Form vor, werden bei Erhöhung der Temperatur jedoch hochviskos flüssig. Die Schmelze hat viskoelastische Eigenschaften und lässt sich dementsprechend zu Fasern ziehen. Diese können nach Abkühlen und ggf. Verstrecken mit Elektronenbestrahlung weiter vernetzt und damit unschmelzbar gemacht bzw. in einen duroplastischen Zustand überführt werden. Eine Pyrolyse der Fasern kann sich an eine solche Nachhärtung der Fasern anschließen.

Die Copolymerisation läuft ab nach dem Schema: 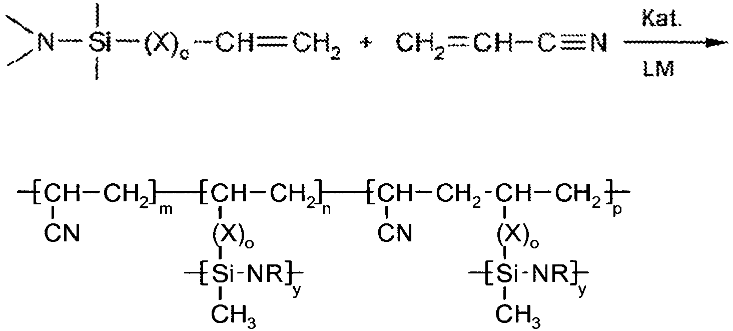
mit X = Alkylen
o = 0 oder 1,
m = 0, 1, 2, 3 oder eine beliebige höhere Zahl,
n = 0, 1, 2, 3 oder eine beliebige höhere Zahl,
p = 0, 1, 2, 3 oder eine beliebige höhere Zahl,
mit der Maßgabe, dass m und p nicht gleichzeitig 0 sein können und dass n und p nicht gleichzeitig 0 sein können,
y = Anzahl der Si-N-Einheiten im eingesetzten Silazan,
R = der Substituent im eingesetzten Silazan, in der Regel entsprechend R² der untenstehenden Formeln (I) bis (III).

Die obige Formel spiegelt wider, dass je nach eingesetztem Ausgangsmaterial und Dauer der Polymerisation / deren Temperatur / der Art des gewählten Katalysators gleichlange oder unterschiedlich lange Blöcke von Oligopolymerisaten des Acrylnitrils und des eingesetzten Silazans im gebildeten Polymeren enthalten sind (p = 0), sich alternierend einpolymerisierte Acrylnitril- und Silazan-Moleküle abwechseln (m und n jeweils = 0) oder aber eine Mischform aus den beiden vorgenannten Formen mit den verschiedenen Bestandteilen entsteht (m ungleich 0, n ungleich 0, p ungleich 0). Geeignete Reaktionspartner für das Acrylnitril sind alle monomeren, oligomeren oder polymeren Silazane mit einer oder mehreren an Silicium gebundenen Alkenylgruppen. Unter "oligomeren Silazanen" sollen erfindungsgemäß Silazane mit 2 bis 10 Siliciumatomen verstanden werden. Polymere Silazane sind demnach solche mit mindestens 11 Siliciumatomen.

Die einsetzbaren Silazane oder Oligo-/Polysilazane besitzen die allgemeine Formel (I) 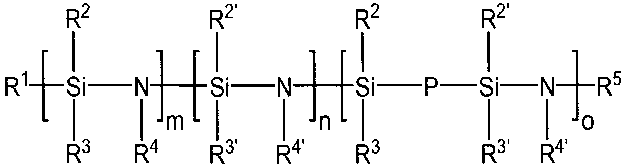 oder die allgemeine Formel (II) 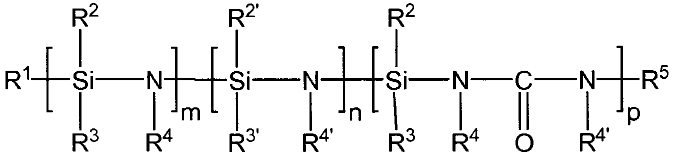 oder die allgemeine Formel (III) 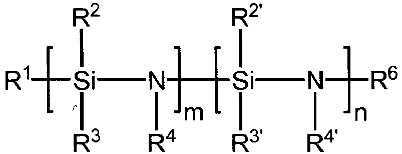 worin
R² Alkenyl ist,
R³ Wasserstoff oder geradkettiges, verzweigtes oder cyclisches, substituiertes oder - bevorzugt - unsubstituiertes Alkyl, dasselbe Alkenyl wie R² oder ein unterschiedliches Alkenyl, Aryl, Arylalkyl, Alkylaryl, Alkenylaryl oder Arylalkenyl darstellt, wobei jeder der Substituenten R² und R³ im Falle von m und/oder o größer 1 in verschiedenen Einheiten eine unterschiedliche Bedeutung haben kann, vorzugsweise aber dieselbe Bedeutung besitzt,
   (a) R^{2'} und R^{3'} gleich oder verschieden sind und geradkettiges, verzweigtes oder cyclisches, substituiertes oder - bevorzugt - unsubstituiertes Alkyl, Alkenyl, Aryl, Arylalkyl, Alkylaryl, Alkenylaryl oder Arylalkenyl bedeuten, wobei jeder der Substituenten R^{2'} und R^{3'} im Falle von n und/oder o größer 1 in verschiedenen Einheiten eine unterschiedliche Bedeutung haben kann, vorzugsweise aber dieselbe Bedeutung besitzt,
      oder
   (b) R² und R^{2'} die voranstehend angegebene Bedeutung besitzen und - bei Anwesenheit mindestens eines Restes R³ und mindestens eines Restes R^{3'} - alle oder jeweils ein Teil der Reste R³ und R^{3'} zusammen eine unsubstituierte oder substituierte, geradkettige oder verzweigte Alkylengruppe mit vorzugsweise 2 verbrückenden Kohlenstoffatomen darstellen können, wobei ggf. der restliche Teil der Reste R³ und R^{3'} die unter (a) angegebene Bedeutung besitzt,
   und worin
R⁴ und R^{4'} Alkyl mit vorzugsweise 1 bis 4 Kohlenstoffatomen, Phenyl oder Wasserstoff bedeuten, wobei mehrere Reste R⁴ und/oder R^{4'} in einem Silazan-Molekül gleich oder verschieden sein können,
R¹ und R⁵ gleich oder verschieden sind und die gleiche Bedeutung wie R² bzw. R³ haben können, wobei R⁵ darüber hinaus auch Si(R¹)(R^{2'})(R^{3'}) bedeuten kann, oder R¹ und R⁵ zusammen eine Einfachbindung darstellen,
R⁶ Si(R²)(R^{2'})-X-R⁷-Si(R²)_{q}(OR^{2'})_{3-q} bedeutet, worin X entweder O oder NR⁴ bedeutet, R⁷ eine Einfachbindung oder eine substituierte oder - bevorzugt - unsubstituierte, geradkettige, verzweigte oder cyclische Alkylengruppe darstellt und q 0, 1, 2 oder 3 sein kann,
P eine Alkylengruppe mit 1 bis 12 Kohlenstoffatomen, vorzugsweise Ethylen ist,
m und p unabhängig voneinander 1, 2, 3, 4, 5, 6, 7, 8, 9, 10 oder eine ganze Zahl zwischen 11 und 25000, vorzugsweise zwischen 11 und 200 bedeuten und n und o unabhängig voneinander 0, 1, 2, 3, 4, 5, 6, 7, 8, 9, 10 oder eine ganze Zahl zwischen 11 und 25000, vorzugsweise zwischen 11 und 200 bedeuten,
wobei die in eckige Klammern gesetzten Einheiten vorzugsweise randomisiert, in anderen Fällen stattdessen blockweise und ggf. alternativ gleichmäßig im jeweiligen Molekül verteilt sein können.

Der Ausdruck "Einheiten" im Zusammenhang der Definition der Silazane mit den Formeln (I) bis (III) bezieht sich auf die jeweils in eine eckige Klammer gesetzten und mit einem die Menge dieser Einheiten im Molekül angebenden Index (m, n ...) versehenen Molekülteile.

In einer ersten bevorzugten Ausführungsform ist R² in den Formeln (I) bis (III) eine Vinylgruppe.

R³ ist in dieser Ausführungsform stärker bevorzugt Alkyl, ganz besonders bevorzugt Methyl oder Ethyl.

Sofern n in den Formeln 1 bis 3 mindestens 1 ist, sind die an jeweils einem Siliciumatom der entsprechenden Einheiten gebundenen Substituenten (R^{2'} und R^{3'}) unabhängig von der ersten bevorzugten Ausführungsform bevorzugt wie folgt ausgewählt: ein Alkylrest in Kombination mit einem Wasserstoffatom, einem weiteren Alkylrest, einem Alkenylrest, vorzugsweise einem Vinylrest, oder einem Phenylrest.

In einer davon unabhängigen dritten bevorzugten Ausführungsform weisen die Alkyl-oder Alkenylreste in den Formeln (I) bis (III) 1 bis 6 Kohlenstoffatome auf. Methyl-, Ethyl- und Vinylreste sind besonders bevorzugt. Vorzugsweise weisen die Aryl-, Arylalkyl-, Alkylaryl-, Alkenylaryl- oder Arylalkenylreste 5 bis 12 Kohlenstoffatome auf. Phenyl- und Styrylreste sind besonders bevorzugt. Diese Ausführungsform ist in Kombination mit der ersten Ausführungsform besonders bevorzugt.

In einer weiteren, davon unabhängigen bevorzugten Ausführungsform der Formeln (I) bis (III) bedeuten R⁴ und/oder R^{4'} Alkyl, insbesondere Methyl. Die mit solchen Materialien hergestellten Kohlenstofffasern sollten überlegene Eigenschaften aufweisen.

In einer davon unabhängigen fünften bevorzugten Ausführungsform sind R², R³, R^{2'} und R^{3'} vorzugsweise ausgewählt unter Alkyl, insbesondere mit 1 bis 8 Kohlenstoffatomen.

In einer davon unabhängigen sechsten Ausführungsform tragen die Substituenten R², R³, R^{2'} und R^{3'} Fluoratome. Diese Ausführungsform ist in Kombination mit der vierten Ausführungsform besonders bevorzugt.

In einer weiteren unabhängigen bevorzugten Ausführungsform der Formel (I) ist der Index o gleich 0.

In einer weiteren unabhängigen bevorzugten Ausführungsform der Formeln (I) oder (II) ist der Index m jeweils gleich 0.

In einer weiteren unabhängigen bevorzugten Ausführungsform bilden R¹ und R⁵ zusammen eine Einfachbindung. Diese Ausführungsform ist besonders bevorzugt für Verbindungen mit der Formel (I), worin der Index o Null ist und ggf. auch der Index m null ist.

In einer weiteren unabhängigen bevorzugten Ausführungsform ist o gleich 0 und sind m und n größer 1 und liegen vorzugsweise zwischen 2 und 25000, insbesondere zwischen 2 und 200. Dabei können m und n gleich oder verschieden sein. Zusätzlich oder alternativ können die m und n Einheiten randomisiert oder gleichmäßig verteilt vorliegen. Dabei können sie blockweise oder nicht blockweise angeordnet sein.

In einer davon unabhängigen weiteren bevorzugten Ausführungsform haben n und o in der Formel (I) die Bedeutung null und hat R⁵ die Bedeutung Si(R¹)(R^{2'})(R^{3'}). Ein Beispiel für diese Ausführungsform (hier mit m = 1) ist:

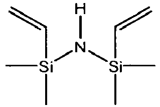

Die Einzelbindungsstriche in diesen Beispielen können insbesondere für Alkyl, ganz besonders bevorzugt für Methyl stehen, sie können aber auch für Hydrid oder teilweise für Alkyl und teilweise für Hydrid stehen.

In einer weiteren unabhängigen bevorzugten Ausführungsform hat m in der Formel (I) die Bedeutung 1, 2, 3, 4, 5 oder eine ganze Zahl zwischen 6 und 50, während n und o null sind, oder es handelt sich um eine Mischung verschiedener dieser Silazane. Dabei können die Substituenten R¹ und R⁵ gleich oder verschieden sein und die gleiche Bedeutung wie R³ haben, wobei R⁵ darüber hinaus auch Si(R¹)(R^{2'})(R^{3'}) bedeuten kann. Dieses oder diese Silazane können gegebenenfalls insbesondere auch in Mischung mit Silazanen vorliegen, in denen R¹ und R⁵ zusammen eine Einfachbindung darstellen.

In einer weiteren unabhängigen bevorzugten Ausführungsform ist o in der Formel (I) null, während m und n gleich oder verschieden sind und zwischen 2 und 200-25000 bedeuten. Dabei können die Substituenten R¹ und R⁵ gleich oder verschieden sein und die gleiche Bedeutung wie R³ haben, wobei R⁵ darüber hinaus auch Si(R¹)(R^{2'})(R^{3'}) bedeuten kann. Dieses oder diese Silazane können gegebenenfalls insbesondere auch in Mischung mit Silazanen vorliegen, in denen R¹ und R⁵ zusammen eine Einfachbindung darstellen.

Beispiele sind die folgenden Oligomere/Polymere: 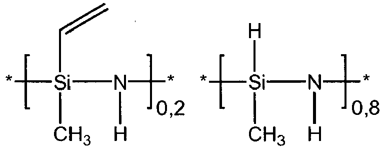 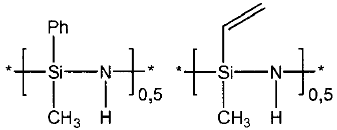 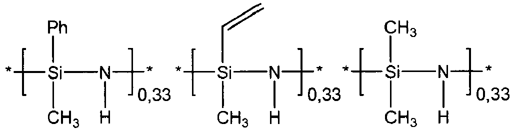 wobei die in eckige Klammern gesetzten Einheiten in den Molekülen randomisiert, ggf. statt dessen blockweise und in anderen Fällen gleichmäßig angeordnet im angegebenen Verhältnis zueinander vorliegen und die Moleküle terminale Wasserstoffatome oder Alkyl- oder Arylgruppen enthalten.

In einer weiteren unabhängigen bevorzugten Ausführungsform sind die Indices n und o gleich null, hat der Index m die Bedeutung 3, und R¹ und R⁵ stellen zusammen eine Einfachbindung dar. Diese Ausführungsform lässt sich allgemein durch die Formel (Ia) darstellen: 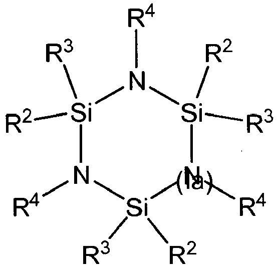 worin R², R³ und R⁴ die für Formel (I) angegebene Bedeutung besitzen.

In einer weiteren unabhängigen bevorzugten Ausführungsform der Formel (I) sind n und o gleich 0, hat m die Bedeutung 2, 3, 4, 5, 6, 7, 8, 9, 10 oder eine darüberliegende Zahl, und R¹ und R⁵ stellen zusammen eine Einfachbindung dar.

In einer weiteren unabhängigen bevorzugten Ausführungsform der Formeln (I) und (II) bedeuten m und n jeweils 2, 3, 4, 5, 6, 7, 8, 9, 10 oder eine darüberliegende Zahl, und R¹ und R⁵ stellen zusammen eine Einfachbindung dar. Diese Verbindungen lassen sich (hier für o bzw. p gleich 0) wiederum beispielhaft durch Formeln wie 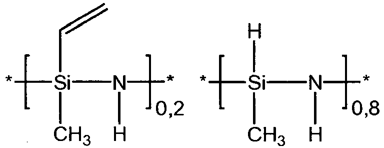 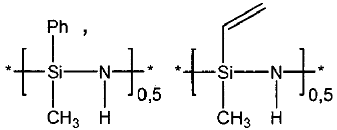 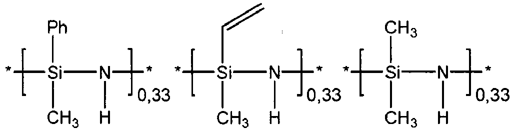 darstellen, wobei wiederum die in eckige Klammern gesetzten Einheiten in den Molekülen randomisiert oder blockweise, in manchen Fällen auch gleichmäßig verteilt, m- bzw. n-fach, bzw. im Fall der zuletzt gezeigten Formel zusammen (m+n)-fach im angegebenen Verhältnis zueinander vorliegen, die Moleküle jedoch in geschlossener Kettenform vorliegen. Diese Variante kann insbesondere im Gemisch mit entsprechenden offenkettigen Silazanen vorliegen und für die vorliegende Erfindung eingesetzt werden.

Soweit die voranstehend als bevorzugt genannten Ausführungsformen einander nicht ausschließen, können zwei oder mehrere davon kombiniert werden.

Silazane der Formel (I) mit o gleich 0 sind im Handel erhältlich und nach Standardverfahren, insbesondere der Ammonolyse von Monohalogensilanen, beispielsweise wie in US 4,395,460 und der darin zitierten Literatur beschrieben, herstellbar. Dabei entstehen z.B. durch die Umsetzung eines Monohalogensilans mit drei organischen Resten Silazane der Formel (I), worin die Indices n und o null sind, der Index m 1 bedeutet und R⁵ die Bedeutung Si(R¹)(R^{2'})(R^{3'}) besitzt. Die organischen Reste werden bei der Reaktion nicht abgespalten.

Ebenso ist es möglich, analog US 6,329,487 B1 der Kion Corporation Mono-, Di- oder Trihalogensilane in einer Druckapparatur in flüssigem Ammoniak zu ammonolysieren und so Silazane der allegemeinen Formel (I) zu erhalten.

Werden dabei Halogensilane mit mindestens einer Si-H-Bindung allein und/oder in Kombination mit Di- bzw. Trihalogensilanen in einem Überschuss an flüssigem, wasserfreiem Ammoniak umgesetzt und länger in diesem Medium belassen, bilden sich in der durch das entstehende Ammoniumhalogenid-Salz bzw. die entsprechende Säure saurer gewordenen Umgebung im Laufe der Zeit durch Abreaktion von Si-H-Bindungen Polymerisationsprodukte, in denen die Indices m, n und o einen höheren Wert und/oder ein anderes Verhältnis als zuvor aufweisen, möglicherweise katalysiert durch die Anwesenheit von gelöstem und ionisiertem Ammoniumhalogenid.

Ebenso ist in US 6,329,487 B1 beschrieben, dass entsprechende Polymerisationsprodukte durch die Einwirkung von in Ammoniak gelöstem Natrium erhalten werden können.

US 4,621,383 und WO 87/05298 beschreiben weiterhin die Möglichkeit der Synthese von Polysilazanen durch übergangsmetallkatalysierte Reaktionen.

Durch geeignete Wahl der organischen Substituenten am Siliciumatom des Silans bzw. einer Mischung entsprechender Ausgangssilane lassen sich mit diesen Verfahren eine Vielzahl von Silanen der Formel (I) erzeugen, worin der Index o null ist, wobei häufig eine Mischung von linearen und kettenförmigen Polymeren entsteht.

Zum Reaktionsmechanismus siehe auch die Dissertation von Michael Schulz am Forschungszentrum Karlsruhe, Institut für Materialforschung "Mikrostrukturierung präkeramischer Polymere mit Hilfe der UV- und Röntgentiefenlithographie", November 2003, FZKA 6901. Dort wird auch die Herstellung von Silazanen der Formel (I) beschrieben, worin der Index o null ist und die Siliciumatome in den Blöcken mit den Indices m und n unterschiedliche Substituenten tragen.

Dort wird auch auf die Herstellung von Harnstoffsilazanen verwiesen: Setzt man Silazanen monofunktionelle Isocyanate zu, erfolgt eine Einschubreaktion der NCO-Gruppe in N-H-Bindungen unter Ausbildung einer Harnstoffgruppe [siehe die vorstehend beschriebenen Silazane der Formel (II)]. Im Übrigen wird hinsichtlich der Herstellung von Harnstoffsilazanen und Poly(Harnstoffsilazanen) auf US 6,165,551, US 4,929,704 und US 3,239,489 verwiesen.

Die Herstellung von Verbindungen der Formel (III) (alkoxy-substituierten Silazanen) ist aus US 6,652,978 B2 bekannt. Zur Herstellung dieser Verbindungen können monomere oder oligomere/polymere Silazane der Formel (I), worin o null ist, mit amino- oder hydroxygruppenhaltigen Alkoxysilanen, beispielsweise 3-Aminopropyl-triethoxysilan, umgesetzt werden.

Ein Herstellungsverfahren für Verbindungen der Formel (I) mit o ungleich null wird in der Dissertation von G. Motz (G. Motz, Dissertation, Universität Stuttgart, 1995) konkret am Beispiel der Ammonolyse des 1,2-Bis(dichlormethylsilyl)ethans vorgestellt. Die Herstellung eines speziellen Vertreters dieser Verbindungen, ABSE, wird gemäß S. Kokott und G. Motz, "Modifizierung des ABSE-Polycarbosilazans mit Multi-Walled Carbon Nanotubes zur Herstellung spinnfähiger Massen", Mat.-wiss. u. Werkstofftech. 2007, 38 (11), 894-900, durch Hydrosilylierung und Ammonolyse einer Mischung aus MeHSiCl₂ und MeViSiCl₂ bewirkt.

N-Alkyl-substituierte Silazane wiederum sind in gleicher Weise für den Fachmann ohne weiteres herstellbar, indem die entsprechenden Halogensilane mit Alkylaminen zur Reaktion gebracht werden, wie z.B. in US 4,935,481 und US 4,595,775 beschrieben.

Das Mengenverhältnis von eingesetztem Silazan zu eingesetztem Acrylnitril ist prinzipiell nicht kritisch. So können beispielsweise die molaren Anteile an Silazan zu Acrylnitril im Bereich von 100:1 bis 1:100 liegen. Als günstig haben sich Anteile von 4:1 bis 1:20 erwiesen. Bevorzugt liegt der molare Anteil an Silazan nicht über demjenigen an Acrylnitril.

Die Umsetzung erfolgt in einem gängigen Lösungsmittel für die Komponenten. Insbesondere können die für die Polymerisation von Acrylnitril üblichen Lösungsmittel wie DMF, 1,3-Dioxolan-2-on, Dimethylacetamid oder DMSO verwendet werden. Es wird ein üblicher Katalysator für radikalische Polymerisationen, insbesondere Polyadditionen, zugegeben. Hier kann man beispielsweise auf die für die Herstellung von Polyacrylnitril bekannten Katalysatoren zurückgreifen, z.B. Azoisobutyronitril.

Die Reaktion wird üblicherweise bei erhöhter Temperatur, z.B. bei 40°C bis 100°C (bzw. bei der Rückflusstemperatur des Lösungsmittels) durchgeführt; sie ist meist nach einigen Stunden abgeschlossen. Man erhält Produkte mit linearen -C-C-Verknüpfungen. Enthält das oder enthalten die eingesetzten Silazane zumindest zwei Alkenylgruppen, können mehrere solche Verknüpfungen von einem Silazanmolekül ausgehen bzw. dieses Molekül einbeziehen. Je nach den sterischen Gegebenheiten können diese Silazane daher Ausgangspunkt für dreidimensionale Verknüpfungen sein. Werden oligomere oder gar polymere Silazane eingesetzt, enthält das entstandene Produkt darüber hinaus Ketten oder Ringe aus Si-N-Gruppen, was die Dichte der Struktur nochmals erhöht.

Es ist bevorzugt, die erfindungsgemäßen Werkstoffe ausschließlich aus Acrylnitril und Silazan zu erzeugen. Allerdings ist es auch möglich, dass sie weitere Zusätze enthalten.

Als Zusätze kommen zum Beispiel organische Stoffe (Monomere oder andere organische Moleküle) in Betracht, die sich mit Acrylnitril copolymerisieren lassen. Hierfür kommen beispielsweise Styrol und/oder Butadien und/oder Vinylcarbazol in Frage. Um die gewünschten Eigenschaften, insbesondere den Flamm- und Feuerschutz, nicht zu sehr zu verschlechtern, sollten diese Zusätze in der Regel nicht mehr als 20 Gew.-% ausmachen, bezogen auf den Anteil der Summe aus Acrylnitril und organischem Molekül. Der oder die organischen Stoffe werden vorzugsweise derselben Lösung zugemischt oder in dieser vorgelegt, in die auch die anderen Komponenten eingebracht werden, um die Polymerisation zu bewirken.

Zusätzlich oder statt dessen kann der Werkstoff einen oder mehrere Füllstoffe enthalten, die vorzugsweise anorganischer Natur sind, ggf. aber auch organisch modifiziert sein können, z.B. um eine Einpolymerisierung zu erleichtern. Der Füllstoff kann je nach Bedarf in einer Menge von bis zu etwa 60 Gew.-%, bezogen auf das Gewicht des Werkstoffs, zugesetzt werden. Bevorzugt sind Mengen von bis zu 20 Gew.-%. Der Füllstoff wird vorzugsweise zugesetzt, bevor das Lösungsmittel abgetrennt wird.

Prinzipiell kann der Werkstoff der vorliegenden Erfindung in beliebige Form gebracht werden. Bevorzugt wird er jedoch für die Herstellung von Fasern eingesetzt bzw. liegt in Faserform vor.

Zur Herstellung von Fasern wird das Lösungsmittel aus der erhaltenen Polymerlösung (bzw. Polymersuspension, falls ein Füllstoff zugesetzt wurde) abgetrennt. Das Produkt ist bei Raumtemperatur in der Regel fest. Wird die Temperatur erhöht, entsteht eine viskoelastische Schmelze aus untereinander verhakten Polymermolekülen. In vielen Fällen liegt der Erweichungspunkt über 100°C.

Aus der Schmelze, vorzugsweise einer füllstofffreien Schmelze, werden Fasern gezogen, vorzugsweise durch Extrusion durch einen Düsenkopf, der eine größere Anzahl von Düsen enthält. Vorzugsweise liegt der Düsenquerschnitt bei etwa 150-400 µm. Die Fasern werden anschließend abgekühlt und dabei vorzugsweise gestreckt, wobei der Durchmesser deutlich geringer wird; bei einer kontinuierlichen Faserherstellung werden sie dann vorzugsweise aufgewickelt.

Die so erhaltenen Fasern eignen sich zum Verarbeiten in textilen Materialien, z.B. Verweben, Verstricken, Legen, oder zum Einarbeiten in Polymermassen als Verstärkungsmittel. Sie sind insbesondere für den Einsatz im Feuerschutz interessant, da sie aufgrund des hohen Anteils an Silicium und Stickstoff feuerhemmende Eigenschaften besitzen.

Des Weiteren können die Fasern durch Pyrolyse in keramische Fasern umgewandelt werden. Hierfür wird die aus der Schmelze erhaltene Polymerfaser erst einmal mit üblichen Methoden unschmelzbar gemacht, beispielsweise durch Bestrahlung mit Elektronenstrahlen. Hierfür sind in der Regel Dosen im Bereich von ca. 200 KGy ausreichend.

Die Pyrolyse erfolgt vorzugsweise unter sauerstofffreiem Schutzgas, beispielsweise Argon. Die Reaktionsbedingungen (Gasatmosphäre, Temperatur) können so gewählt werden, dass das Verhältnis von Silicium zu Stickstoff zu Kohlenstoff im Produkt annähernd erhalten bleibt (in der Regel sinkt allerdings der Kohlenstoffgehalt geringfügig, weil sich etwas Methan bilden kann). Auf diese Weise kann man zu SiCN-Keramikfasern gelangen. Diese können gegebenenfalls mit Hilfe bekannter Maßnahmen in SiC- oder SiN-Fasern überführt werden, z.B. durch Erhitzen der Fasern auf mindestens 1450°C, wobei SiC entsteht, oder durch Pyrolyse in einer Ammoniakatmosphäre, was zur Bildung von Methan aus dem Kohlenstoff führt.

Die nachstehenden Beispiele sollen die Erfindung näher erläutern. Die angegebenen Äquivalentverhältnisse beziehen sich auf die Doppelbindungen (Vinyl bzw. Acryl).

### Beispiel 1

### Umsetzung von Divinyltetramethyldisilazan (DVTMDS) mit Acrylnitril (ACN) im Verhältnis 1:1

Unter Stickstoffatmosphäre werden 1,59 g (8,6 mol) DVTMDS, 0,91 g (17,2 mmol) ACN und 2,5 g Dimethylformamid (DMF) in einem Dreihalskolben, ausgestattet mit einem Rückflusskühler mit Blasenzähler, Gaszuleitung und Magnetrührer, zusammengegeben. Zu dieser Mischung werden 37,5 mg Azoisobutyronitril (AIBN) gegeben, und anschließend wird fünf Stunden bei 75°C gerührt. Man erhält je nach Ansatz eine dunkelgelbe bis bernsteinfarbene Flüssigkeit. Die vinylische Doppelbindung des Silazans ist laut Ramanspektrum fast vollständig verschwunden.

### Beispiel 2

### Umsetzung von Divinyltetramethyldisilazan mit Acrylnitril im Verhältnis 1:4

Unter Stickstoffatmosphäre werden 0,76 g (4,1 mol) DVTMDS, 1,74 g (32,8 mmol) ACN und 2,5 g Dimethylformamid (DMF) in einem Dreihalskolben, ausgestattet mit einem Rückflusskühler mit Blasenzähler, Gaszuleitung und Magnetrührer, zusammengegeben. Zu dieser Mischung werden 37,5 mg Azoisobutyronitril (AIBN) gegeben, und anschließend wird fünf Stunden bei 75°C gerührt. Man erhält je nach Ansatz eine dunkelgelbe bis bernsteinfarbene Lösung. Die vinylische Doppelbindung des Silazans war laut Ramanspektrum fast vollständig verschwunden.

### Beispiel 3

### Umsetzung eines cyclischen Silazans, erhalten durch Ammonolyse eines Gemisches aus 50 Mol-% Dichlorvinylmethylsilan und 50 Mol-% Dichlordimethylsilan (VML50), mit Acrylnitril im Molverhältnis 1:1

Unter Stickstoffatmosphäre werden 1,82 g VML50, 0,61 g ACN und 2,5 g Dimethylformamid (DMF) in einem Dreihalskolben, ausgestattet mit einem Rückflusskühler mit Blasenzähler, Gaszuleitung und Magnetrührer, zusammengegeben. Zu dieser Mischung werden 75 mg (0,46 mmol) Azoisobutyronitril (AIBN) gegeben, und anschließend wird fünf Stunden bei 75°C gerührt. Man erhält eine gelbe, höherviskose Lösung.

### Beispiel 4

### Umsetzung eines cyclischen Silazans, erhalten durch Ammonolyse eines Gemisches aus 50 Mol-% Dichlorvinylmethylsilan und 50 Mol-% Dichlordimethylsilan (VML50), mit Acrylnitril im Molverhältnis 1:4

Unter Stickstoffatmosphäre werden 1,04 g (0,66 mmol-äq) VML50, 1,39 g (26,1 mmol) ACN und 2,5 g Dimethylformamid (DMF) in einem Dreihalskolben, ausgestattet mit einem Rückflusskühler mit Blasenzähler, Gaszuleitung und Magnetrührer, zusammengegeben. Zu dieser Mischung werden 75 mg (0,46 mmol) Azoisobutyronitril (AIBN) gegeben, und anschließend wird fünf Stunden bei 75°C erwärmt. Bereits nach weniger als zwei Stunden kommt das Rühren wegen Gelbildung zum Erliegen. Man erhält ein gelbes Gel.

### Beispiel 5 - Herstellung von Fasern

Das durch Polymerisation eines Vinylsilazans mit Acrylnitril erhaltene Polymer wird vom Lösungsmittel befreit und erwärmt, bis eine viskose Schmelze entsteht. Diese wird durch eine Düsenplatte mit mehreren hundert Düsen mit Durchmessern von 200 oder 300 µm gepresst. Die entstehenden Fäden sinken in einem Raum mit normaler Raumtemperatur mit der Schwerkraft nach unten. Die Faserenden werden gefasst, und das Faserbündel wird unter Zug auf eine rotierende Walze gewickelt, wobei die Fasern auf eine Dicke von etwa 10-30 µm verstreckt werden.

### Beispiel 6 - Nachvernetzung der Fasern

Die Fasern des Beispiels 5 werden einer Elektronenbestrahlung von 200 KGy ausgesetzt. Anschließend sind sie duroplastisch und lassen sich nicht mehr aufschmelzen.

## Patentansprüche

1. Copolymer, erhältlich durch Umsetzung von
(i) Acrylnitril mit
(ii) mindestens einem monomeren, oligomeren und/oder polymeren Silazan, wobei das Silazan mindestens eine vinylische Doppelbindung enthält.

2. Copolymer nach Anspruch 1, worin das Silazan ausgewählt ist unter solchen der allgemeinen Formel (I): 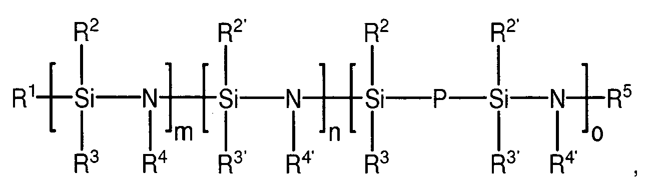 der allgemeinen Formel (II) : 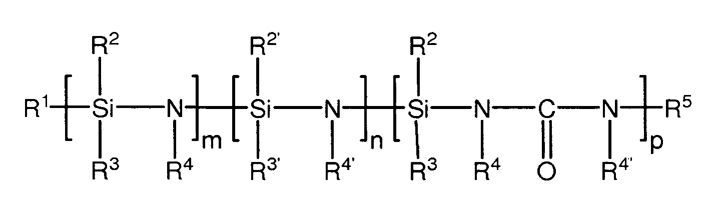 und der allgemeinen Formel (III) : 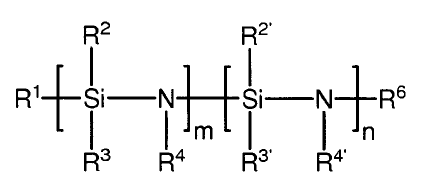 worin
(a) R² Alkenyl ist,
R³ Wasserstoff oder geradkettiges, verzweigtes oder cyclisches, substituiertes oder unsubstituiertes Alkyl, dasselbe Alkenyl wie R² oder ein unterschiedliches Alkenyl, Aryl, Arylalkyl, Alkylaryl, Alkenylaryl oder Arylalkenyl bedeuten, wobei jeder der Substituenten R² und R³ im Falle von m und/oder o größer 1 in verschiedenen Einheiten eine unterschiedliche oder dieselbe Bedeutung besitzt,
R^{2'} und R^{3'} gleich oder verschieden sind und geradkettiges, verzweigtes oder cyclisches, substituiertes oder unsubstituiertes Alkyl, Alkenyl, Aryl, Arylalkyl, Alkylaryl, Alkenylaryl oder Arylalkenyl bedeuten, wobei jeder der Substituenten R^{2'} und R^{3'} im Falle von n und/oder o größer 1 in verschiedenen Einheiten eine unterschiedliche Bedeutung oder dieselbe Bedeutung besitzt,
oder
(b) sofern mindestens ein Rest R³ und ein Rest R^{3'} vorhanden sind, R² und R^{2'} die voranstehend angegebene Bedeutung besitzen und (i) alle oder (ii) jeweils ein Teil der Reste R³ und R^{3'} zusammen eine unsubstituierte oder substituierte, geradkettige oder verzweigte Alkylengruppe darstellen, wobei in Variante (ii) der restliche Teil der Reste R³ und R^{3'} die unter (a) angegebene Bedeutung besitzt,
und worin
R⁴ und R^{4'} Alkyl, Phenyl oder Wasserstoff bedeuten, wobei mehrere Reste R⁴ und/oder R^{4'} in jeweils einem Molekül der Verbindungen (I) bis (III) gleich oder verschieden sein können,
R¹ und R⁵ gleich oder verschieden sind und die gleiche Bedeutung wie R² bzw. R³ haben können, wobei R⁵ darüber hinaus auch Si(R¹)(R^{2'})(R^{3'}) bedeuten kann oder R¹ und R⁵ zusammen eine Einfachbindung darstellen,
R⁶ Si(R²)(R^{2'})-X-R⁷-Si(R²)_{q}(OR^{2'})_{3-q} bedeutet, worin X entweder O oder NR⁴ bedeutet, R⁷ eine Einfachbindung oder eine substituierte oder unsubstituierte, geradkettige, verzweigte oder cyclische Alkylengruppe darstellt und q 0, 1, 2 oder 3 sein kann,
P eine Alkylengruppe mit 1 bis 12 Kohlenstoffatomen ist,
m und p unabhängig voneinander 1, 2, 3, 4, 5, 6, 7, 8, 9, 10 oder eine ganze Zahl zwischen 11 und 25000 bedeuten, und
n und o unabhängig voneinander 0, 1, 2, 3, 4, 5, 6, 7, 8, 9, 10 oder eine ganze Zahl zwischen 11 und 25000 bedeuten,
wobei die in eckige Klammern gesetzten Einheiten gleichmäßig, randomisiert oder blockweise im jeweiligen Molekül verteilt sein können.

3. Copolymer nach Anspruch 1 oder 2, erhalten ausschließlich aus Acrylnitril und Silazan.

4. Copolymer nach Anspruch 1 oder 2, erhältlich durch Umsetzung
(i) einer Mischung von Acrylnitril und einem organischen Molekül, das sich mit Acrylnitril copolymerisieren lässt, wobei das organische Polymer maximal in einem Anteil von 20 Gew.-% in der Mischung vorliegt, und
(ii) einem monomeren, oligomeren und/oder polymeren Silazan, wobei das Silazan mindestens eine vinylische Doppelbindung enthält.

5. Copolymer nach Anspruch 4, worin das organische Molekül ausgewählt ist unter Styrol, Butadien, Vinylcarbazol und einer Mischung von zweien oder allen dreien dieser Moleküle.

6. Copolymer nach einem der voranstehenden Ansprüche, **dadurch gekennzeichnet, dass** es mit einem Füllstoff gefüllt ist.

7. Copolymer nach einem der voranstehenden Ansprüche in Faserform.

8. Copolymer nach Anspruch 7, **dadurch gekennzeichnet**, das es unschmelzbar ist.

9. Verwendung von faserförmigen Copolymeren nach Anspruch 7 oder 8 zur Herstellung von keramischen Fasern.

10. Verfahren zum Herstellen eines Copolymeren wie in Anspruch 1 definiert, **dadurch gekennzeichnet, dass**
(i) Acrylnitril und
(ii) mindestens ein monomeres, oligomeres und/oder polymeres Silazan, das mindestens eine vinylische Doppelbindung enthält,
in einem Lösungsmittel gelöst und mit Hilfe eines Katalysators für radikalische Polymerisation copolymerisiert werden.

11. Verfahren nach Anspruch 10, **dadurch gekennzeichnet, dass** dem Lösungsmittel ein Füllstoff zugesetzt wird.

12. Verfahren zum Herstellen von Fasern aus einem Copolymeren wie in Anspruch 1 definiert, **dadurch gekennzeichnet, dass**
(A)
(i) Acrylnitril und
(ii) mindestens ein monomeres, oligomeres und/oder polymeres Silazan, das mindestens eine vinylische Doppelbindung enthält,
in einem Lösungsmittel gelöst und mit Hilfe eines Katalysators für radikalische Polymerisation copolymerisiert werden,
(B) das Lösungsmittel aus der erhaltenen Copolymerlösung abgetrennt wird,
(C) das gemäß (B) erhaltene Produkt, sofern es bei Raumtemperatur nicht flüssig oder viskos ist, in eine Schmelze überführt wird, und
(D) das Produkt oder die daraus erzeugte Schmelze durch eine oder mehrere Düsen extrudiert wird, wobei Fasern entstehen.

13. Verfahren nach Anspruch 12, worin die extrudierten Fasern anschließend unschmelzbar gemacht werden.

14. Verfahren nach Anspruch 13, worin die Fasern durch Bestrahlen mit Elektronenstrahlen unschmelzbar gemacht werden.

15. Verfahren zum Herstellen von SiCN-Keramikfasern, **dadurch gekennzeichnet, dass** unschmelzbare Fasern, hergestellt nach dem Verfahren des Anspruchs 13 oder 14, unter sauerstofffreiem Schutzgas pyrolysiert werden.

16. Verfahren zum Herstellen von SiC-Keramikfasern, **dadurch gekennzeichnet, dass** SiCN-Keramikfasern, hergestellt wie in Anspruch 15 beansprucht, auf mindestens 1450°C erhitzt werden.

17. Verfahren zum Herstellen von SiN-Keramikfasern, **dadurch gekennzeichnet, dass** SiCN-Keramikfasern, hergestellt wie in Anspruch 15 beansprucht, in einer Ammoniakatmosphäre pyrolysiert werden.

## Claims

1. Copolymer obtainable by reaction of
(i) acrylonitrile with
(ii) at least one monomeric, oligomeric and/or polymeric silazane, wherein said silazane contains at least one vinylic double bond.

2. Copolymer in accordance with claim 1, in which the silazane is selected from those of the general formula (I): 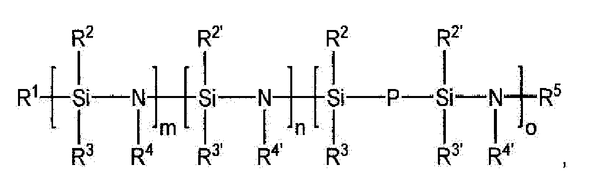 of general formula (II), 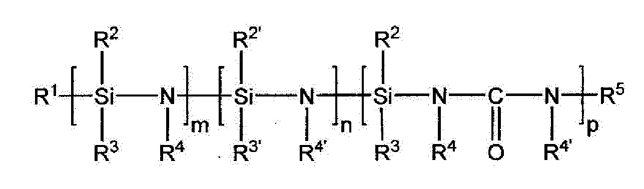 and of general formula (III), 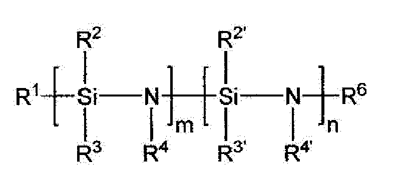 in which
(a) R² is alkenyl,
R³ means hydrogen or straight-chained, branched or cyclic, substituted or unsubstituted alkyl, the same alkenyl as R² or a different alkenyl, aryl, arylalkyl, alkylaryl, alkenylaryl or arylalkenyl, where in the case when m and/or o is/are greater than 1, each of the substituents R² and R³ has a different or the same meaning in different units,
R^{2'} and R^{3'} are the same or different and mean straight-chained, branched or cyclic, substituted or unsubstituted alkyl, alkenyl, aryl, arylalkyl, alkylaryl, alkenylaryl or arylalkenyl, where in the case when m and/or o is/are greater than 1, each of the substituents R² and R³ has a different meaning or the same meaning in different units,
or
(b) if at least one radical R³ and a radical R^{3'} are present, R² and R^{2'} have the meaning given above, and (i) all or (ii) part of the radicals R³ and R^{3'} together represent an unsubstituted or substituted, straight-chained or branched alkylene group, wherein in variant (ii) the remaining part of the radicals R³ and R^{3'} has the meaning given under (a),
and in which
R⁴ and R^{4'} denote alkyl, phenyl or hydrogen, wherein several radicals R⁴ and/or R^{4'} present in one molecule of compounds (I) to (III) may be the same or different,
R¹ and R⁵ are the same or different and can have the same meaning as R² and R³, respectively, while R⁵ may also denote Si(R¹)(R^{2'})(R^{3'}) or R¹ and R⁵ together represent a single bond,
R⁶ denotes Si(R²)(R^{2'})-X-R⁷-Si(R²)_{q}(OR^{2'})_{3-q} where X means either O or NR⁴, R⁷ denotes a single bond or a substituted or unsubstituted, straight-chained, branched or cyclic alkylene group, and q may be 0, 1, 2 or 3,
P is an alkylene group with 1 to 12 carbon atoms,
m and p independently of each other denote 1, 2, 3, 4, 5, 6, 7, 8, 9, 10 or a whole number between 11 and 25,000, and
n and o independently of each other denote 0, 1, 2, 3, 4, 5, 6, 7, 8, 9, 10 or a whole number between 11 and 25,000,
wherein the units placed in square brackets can be distributed in a given molecule uniformly, randomly or in blocks.

3. Copolymer in accordance with claim 1 or 2, obtainable exclusively from acrylonitrile and silazane.

4. Copolymer in accordance with claim 1 or 2 obtained by reacting
(i) a mixture of acrylonitrile and an organic molecule that can be copolymerized with acrylonitrile, said organic polymer being present maximally in a proportion of 20 wt.% in the mixture, and
(ii) a monomeric, oligomeric and/or polymeric silazane, said silazane containing at least one vinylic double bond.

5. Copolymer in accordance with claim 4, in which the organic molecule is selected from among styrene, butadiene, vinyl carbazole and a mixture of two or all three of these molecules.

6. Copolymer in accordance with one of the above claims, **characterized in that** it is filled with a filler.

7. Copolymer in accordance with one of the above claims in fiber form.

8. Copolymer in accordance with claim 7, **characterized in that** it is infusible.

9. Use of copolymers in fiber form in accordance with claim 7 or 8 for the production of ceramic fibers.

10. Process for the production of a copolymer as defined in claim 1, **characterized in that**
(i) acrylonitrile and
(ii) at least one monomeric, oligomeric and/or polymeric silazane that contains at least one vinylic double bond,
are dissolved in a solvent and copolymerized by means of a catalyst for radical polymerization.

11. Process in accordance with claim 10, **characterized in that** a filler is added to the solvent.

12. Process for the production of fibers from a copolymer as defined in claim 1, **characterized in that**
(A)
(i) acrylonitrile and
(ii) at least one monomeric, oligomeric and/or polymeric silazane that contains at least one vinylic double bond,
are dissolved in a solvent and copolymerized by means of a catalyst for radical polymerization,
(B) the solvent is separated from the copolymer solution obtained,
(C) the product obtained according to (B), if it is not liquid or viscous at room temperature, is transformed into a melt, and
(D) the product or melt created from it is extruded through one or more nozzles, resulting in the formation of fibers.

13. Process in accordance with claim 12, wherein the extruded fibers are then made infusible.

14. Process in accordance with claim 13, wherein the extruded fibers are made infusible by irradiation with electron beams.

15. Process for the production of SiCN ceramic fibers, **characterized in that** infusible fibers produced according to the process of claim 13 or 14 are pyrolyzed under oxygen-free protective gas.

16. Process for the production of SiC ceramic fibers, **characterized in that** SiCN ceramic fibers produced as claimed in claim 15 are heated to at least 1450°C.

17. Process for the production of SiN ceramic fibers, **characterized in that** SiCN ceramic fibers produced as claimed in claim 15 are pyrolyzed in an ammonia atmosphere.

## Revendications

1. Copolymère pouvant être obtenu en faisant réagir :
(i) de l'acrylonitrile avec
(ii) au moins un silazane monomère, oligomère et/ou polymère, le silazane contenant au moins une double liaison vinylique.

2. Copolymère selon la revendication 1, dans lequel le silazane est choisi parmi ceux de formule générale (I) : 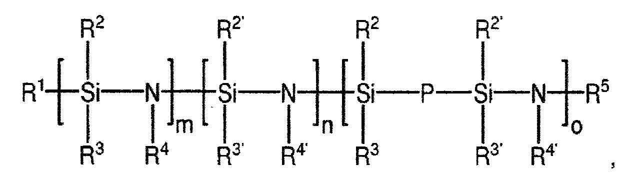 de formule générale (II) : 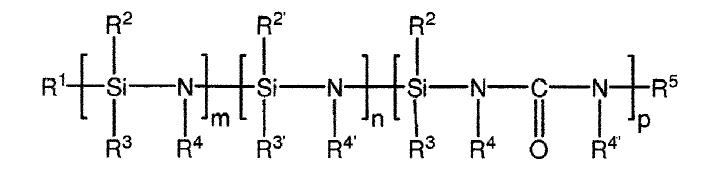 et de formule générale (III) : 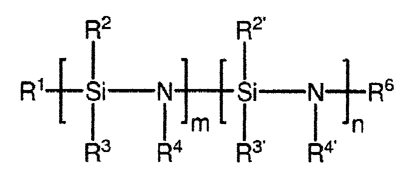 dans lesquelles
(a) R² est un groupe alcényle,
R³ désigne l'hydrogène ou un groupe alkyle substitué ou non substitué, linéaire, ramifié ou cyclique, le même groupe alcényle que R² ou un groupe alcényle différent, un groupe aryle, arylalkyle, alkylaryle, alcénylaryle ou arylalcényle, chacun des substituants R² et R³, dans le cas où m et/ou o est/sont supérieur(s) à 1 dans différents motifs, a une signification identique ou différente,
R^{2'} et R^{3'} sont identiques ou différents et désignent un groupe alkyle substitué ou non substitué linéaire, ramifié ou cyclique, un groupe alcényle, aryle, arylalkyle, alkylaryle, alcénylaryle ou arylalcényle, chacun des substituants R^{2'} et R^{3'}, dans le cas où n et/ou o est/sont supérieur(s) à 1 dans différents motifs, a une signification identique ou différente,
ou
(b) si au moins un radical R³ et un radical R^{3'} sont présents, R² et R^{2'} ont la signification mentionnée ci-dessus et (i) tous ou (ii) respectivement une partie des radicaux R³ et R^{3'} représente conjointement un groupe alkylène substitué ou non substitué, linéaire ou ramifié, la partie restante des radicaux R³ et R^{3'} ayant dans la variante (ii) la signification mentionnée en (a), et dans lesquelles
R⁴ et R^{4'} désignent un groupe alkyle, un groupe phényle ou l'hydrogène, plusieurs radicaux R⁴ et/ou R^{4'} respectivement dans une molécule des composés (I) à (III) peuvent être identiques ou différents,
R¹ et R⁵ sont identiques ou différents et peuvent avoir la même signification que R² et R³, respectivement, R⁵ pouvant en outre également désigner Si(R¹) (R^{2'}) (R^{3'}) ou R¹ et R⁵ représentent ensemble une liaison simple,
R⁶ désigne Si(R²)(R^{2'})-X-R⁷-Si(R²)_{q}(OR^{2'})_{3-q}, X désignant soit 0, soit NR⁴, R⁷ est une liaison simple ou représente un groupe alkylène substitué ou non substitué, linéaire, ramifié ou cyclique et q peut être 0, 1, 2 ou 3,
P est un groupe alkylène ayant 1 à 12 atomes de carbone,
m et p, indépendamment l'un de l'autre, désignent 1, 2, 3, 4, 5, 6, 7, 8, 9, 10 ou un nombre entier compris entre 11 et 25 000,
et
n et o, indépendamment l'un de l'autre, désignent 0, 1, 2, 3, 4, 5, 6, 7, 8, 9, 10 ou un nombre entier compris entre 11 et 25 000,
les motifs placés entre crochets pouvant être distribués de manière uniforme, aléatoire ou par blocs dans une molécule respective.

3. Copolymère selon la revendication 1 ou 2, exclusivement obtenu à partir d'acrylonitrile et de silazane.

4. Copolymère selon la revendication 1 ou 2, pouvant être obtenu en faisant réagir :
(i) un mélange d'acrylonitrile et d'une molécule organique qui peut être copolymérisée avec l'acrylonitrile, le polymère organique étant présent au maximum dans une proportion de 20 % en poids dans le mélange, et
(ii) dans un silazane monomère, oligomère et/ou polymère, le silazane contenant au moins une double liaison vinylique.

5. Copolymère selon la revendication 4, dans lequel la molécule organique est choisie parmi le styrène, le butadiène, le vinylcarbazole et un mélange contenant deux ou l'ensemble de ces trois molécules.

6. Copolymère selon l'une quelconque des revendications précédentes, **caractérisé en ce qu'**il est rempli d'une charge.

7. Copolymère selon l'une quelconque des revendications précédentes, sous forme fibreuse.

8. Copolymère selon la revendication 7, **caractérisé en ce qu'**il ne peut pas être fondu.

9. Utilisation de copolymères fibreux selon la revendication 7 ou 8 pour fabriquer des fibres céramiques.

10. Procédé pour produire un copolymère selon la revendication 1, **caractérisé en ce que** :
(i) l'acrylonitrile et
(ii) au moins un silazane monomère, oligomère et/ou polymère qui contient au moins une double liaison vinylique, sont dissous dans un solvant et copolymérisés au moyen d'un catalyseur pour polymérisation radicalaire.

11. Procédé selon la revendication 10, **caractérisé en ce qu'**on ajoute une charge au solvant.

12. Procédé pour produire des fibres à partir d'un copolymère selon la revendication 1, **caractérisé en ce que** :
(A)
(i) l'acrylonitrile et
(ii) au moins un silazane monomère, oligomère et/ou polymère qui contient au moins une double liaison vinylique,
sont dissous dans un solvant et copolymérisés au moyen d'un catalyseur pour polymérisation radicalaire,
(B) le solvant est séparé de la solution de copolymère obtenue,
(C) le produit obtenu selon (B), dès lors qu'il n'est pas liquide ou visqueux à température ambiante, est transformé en une matière fondue, et
(D) le produit ou la matière fondue obtenue à partir de celui-ci est extrudé(e) dans une ou plusieurs filières, ce qui permet la création de fibres.

13. Procédé selon la revendication 12, dans lequel les fibres extrudées sont ensuite rendues non fusibles.

14. Procédé selon la revendication 13, dans lequel les fibres sont rendues non fusibles par irradiation avec des faisceaux d'électrons.

15. Procédé pour produire des fibres céramiques en SiCN, **caractérisé en ce que** les fibres non fusibles, fabriquées avec le procédé selon la revendication 13 ou 14, subissent une pyrolyse sous atmosphère de gaz protecteur sans oxygène.

16. Procédé pour produire des fibres céramiques en SiCN, **caractérisé en ce que** les fibres céramiques en SiCN, fabriquées comme revendiqué dans la revendication 15, sont chauffées à au moins 1450 °C.

17. Procédé pour produire des fibres céramiques en SiCN, **caractérisé en ce que** les fibres céramiques en SiCN, fabriquées comme revendiqué dans la revendication 15, subissent une pyrolyse sous atmosphère d'ammoniac.
